# EUROPEAN PATENT APPLICATION

(11) **EP 4 292 971 A1**
(43) Date of publication of application: **20.12.2023**
(21) Application number: 21925331.7
(22) Date of filing: 12.04.2021
(51) Int. Cl.: B65H 75/44, G05G 1/12

(54) **FASTENING DEVICE, AND CABLE TIE TIGHTENING AND RELEASE METHOD**

(30) Priority: 09.02.2021 CN 202110180676
(71) Applicant: Chen, Yi-ying, Taichung City (TW)
(72) Inventor: Chen, Yi-ying, Taichung City (TW)
(74) Representative: Vossius & Partner Patentanwälte Rechtsanwälte mbB
(86) International application number: PCT/CN2021/086517
(87) International publication number: WO 2022/170675

(57) **Abstract**

A fastening device, and a cable tie tightening and release method. The fastening device comprises a housing, a spool, a plurality of ratchet teeth, a section-by-section release assembly, and a knob. The housing comprises an internal space, the spool is disposed in the internal space and allows a cable tie to wind thereon, and the ratchet teeth are located in the internal space. The section-by-section release assembly comprises a ratchet arm and an operation portion, the ratchet arm is selectively engaged with at least one of the ratchet teeth, and the operation portion is linked with the ratchet arm. The knob is disposed on the housing. When engaged with the ratchet teeth, the ratchet arm stops the spool from rotating in a release direction; when the knob is rotated in a tightening direction, the ratchet arm is disengaged from the ratchet teeth to allow the spool to tighten the cable tie; and when the operation portion is operated, the ratchet arm is separated from the ratchet teeth to allow the cable tie to be released section by section. The operation of the operation portion can allow the cable tie to be released section by section, thereby achieving the aim of section-by-section release of the cable tie.

## Description

### Technical Field

The present disclosure relates to a fastening device and a tightening and releasing method. More particularly, the present disclosure relates to a fastening device for releasing or tightening a lace and a lace tightening and releasing method.

### Description of Related Art

In daily life, cords, such as a lace or a thread, are usually used to tighten articles. The most common tightening method is to use the cord to reciprocately pass through holes on the article, such as eyelets of a shoe, and then tie a knot to secure the article. But in this kind of tightening method, the knot is loosened easily because of an external force. Not only does the knot need to be tied again, but also lots of inconveniences come owing to the insecurity of the articles.

In order to solve such problems, some practitioners developed a simple fastening mechanism including a case, a driving unit and a spring. The case includes holes configured for the lace to pass therethrough. Through the reaction force between the spring and the driving unit, the lace can be clamped between the driving unit and the case so as to be fastened. The length of the lace can be changed by pressing the spring to change the position of the driving unit. However, in such fastening mechanism, the restoring force of the spring is served as the securing force; thus, the lace is easily to be released owing to vibrations or an external force. In addition, the fastening mechanism has no space to receive the lace, and the exposure of the lace may bring danger.

Therefore, some practitioners developed another kind of buckle which may be rotated to tighten the cord, the cord may be received inside the buckle, and through the interference between components inside the buckle, and the length of the cord as well as the tightness may be adjusted. However, the structure of the buckle is complex, such that the manufacturing cost is increased, and the buckle has assembly and repair difficulties. In addition, as releasing the buckle, only full release function can be practiced, but the cord (lace) cannot be sectionally (incrementally) released, and there is still an inconvenience of usage.

Based on the aforementioned problems, how to improve the structure of the fastening device such as the buckle to include an incremental release function becomes a target that those in the industry pursue.

### SUMMARY

The present disclosure provides a fastening device and a lace fastening and releasing method, and with the structural configuration of the fastening device, a goal of incrementally releasing and fully releasing the lace may be achieved.

According to one embodiment of the present disclosure a fastening device is provided, which includes a case, a spool, a plurality of ratchet teeth, an incremental releasing set and a knob. The case includes an inner space, the spool is disposed in the inner space and configured for a lace to be wound therearound, and the ratchet teeth are located in the inner space. The incremental releasing set includes a ratchet arm and an operated portion, the ratchet arm is selectively engaged with at least one of the ratchet teeth, and the operated portion is linked with the ratchet arm. The knob is disposed at the case. The ratchet arm is engaged with at least one of the ratchet teeth to prohibit the spool from rotating in a releasing direction, and as the knob is rotated in a tightening direction, the ratchet arm is disengaged from at least one of the ratchet teeth to allow the spool to tighten the lace; as the operated portion is operated, the ratchet arm is disengaged from at least one of the ratchet teeth, such that allows the lace to be incrementally released.

Therefore, before the operated portion is operated, the ratchet arm may prohibit the spool from releasing the lace, and after the operated arm is operated, the lace may be incrementally released, thereby achieving a goal of incrementally releasing the lace.

According to the fastening device of the aforementioned embodiment, a ratchet gear may be further included, which is disposed in the inner space and selectively coupled to the spool, and the ratchet teeth are located at the ratchet gear.

According to the fastening device of the aforementioned embodiment, the ratchet gear may be selectively coupled to the spool, and the knob is operated to release a coupling between the ratchet gear and the spool, thereby allowing the lace to be fully released.

According to the fastening device of the aforementioned embodiment, the knob may include at least one guiding track, the ratchet gear includes at least one guiding portion coupled with the guiding track, and the knob is rotated in the releasing direction such that the ratchet gear is guided by the at least one guiding track so as to be lifted, thereby releasing the coupling between the ratchet gear and the spool.

According to the fastening device of the aforementioned embodiment, the ratchet gear may include an outer annular portion and an elevating portion, the ratchet teeth are located at the outer annular portion, the elevating portion is engaged with the outer annular portion and includes a screw hole, the knob includes a screw bar coupled to the screw hole, and the knob is rotated in the releasing direction to allow the elevating portion to be lifted, thereby releasing the coupling between the ratchet gear and the spool.

According to the fastening device of the aforementioned embodiment, the incremental releasing set may further include a stopping portion, the stopping portion is arranged with the ratchet arm in an interval, and as the ratchet arm is engaged with at least one of the ratchet teeth, the stopping portion is not engaged with any one of the ratchet teeth; as the operated portion is operated to allow the ratchet arm to disengage from at least one of the ratchet teeth, the stopping portion is engaged with at least another one of the ratchet teeth, thereby stopping the spool.

According to the fastening device of the aforementioned embodiment, the operated portion may expose from the case.

According to the fastening device of the aforementioned embodiment, the case may include an annular wall and a pivoting base. The annular wall may include an opening, and the pivoting base protrudes radially and outward from the annular wall. The ratchet arm and the operated portion are connected integrally and are pivoted at the pivoting base, and the ratchet arm extends into the inner space from the opening to engage with at least one of the ratchet teeth.

According to the fastening device of the aforementioned embodiment, the incremental releasing set may further include an elastic element, and the elastic element stores an energy as the ratchet arm is disengaged from at least one of the ratchet teeth.

According to another embodiment of the present disclosure a lace tightening and releasing method is provided, which includes a fastening step, an incremental releasing step and a full releasing step. In the fastening step, a fastening device disposed at an article is operated, the fastening device includes a case, a spool, a plurality of ratchet teeth, a ratchet arm and a knob, the spool is coupled to a lace and located within the case, and as the knob is rotated in a tightening direction, the ratchet arm is disengaged from at least one of the ratchet teeth to allow the spool to fasten the lace. In the incremental releasing step, an operated portion of the fastening device is operated, and the ratchet arm is disengaged from at least one of the ratchet teeth to engage with at least another one of the ratchet teeth, thereby allowing the spool to rotate in a releasing direction to release one segment of the lace. In the full releasing step, the knob is operated to allow the ratchet arm of the fastening device not to prohibit the spool from rotating in the releasing direction, thereby allowing the lace to be freely released.

### BRIEF DESCRIPTION OF THE DRAWINGS

Fig. 1 shows a three-dimensional schematic view of a fastening device according to a first embodiment of the present disclosure;
Fig. 2 shows one exploded view of the fastening device of the first embodiment of Fig. 1;
Fig. 3 shows another exploded view of the fastening device of the first embodiment of Fig. 1;
Fig. 4 shows one cross-sectional view of the fastening device of the first embodiment of Fig. 1;
Fig. 5 shows another cross-sectional view of the fastening device of the first embodiment of Fig. 1;
Fig. 6A shows one cross-sectional view of the fastening device of the first embodiment of Fig. 4 taken along line 6-6;
Fig. 6B shows another cross-sectional view of the fastening device of the first embodiment of Fig. 4 taken along line 6-6;
Fig. 7 shows an exploded view of a fastening device according to a second embodiment of the present disclosure;
Fig. 8 shows an exploded view of a fastening device according to a third embodiment of the present disclosure;
Fig. 9 shows one exploded view of a fastening device according to a fourth embodiment of the present disclosure;
Fig. 10 shows another exploded view of the fastening device of the fourth embodiment of Fig. 9;
Fig. 11 shows one cross-sectional view of the fastening device of the fourth embodiment of Fig. 10;
Fig. 12 shows another cross-sectional view of the fastening device of the fourth embodiment of Fig. 10;
Fig. 13 shows an exploded view of a fastening device according to a fifth embodiment of the present disclosure;
Fig. 14 shows an exploded view of a fastening device according to a sixth embodiment of the present disclosure;
Fig. 15 shows a cross-sectional view of the fastening device of the sixth embodiment of Fig. 14; and
Fig. 16 shows a block flow chart of a lace tightening and releasing method according to a seventh embodiment of the present disclosure.

### [Reference numeral]

1000, 2000, 3000, 4000, 5000, 6000: fastening device
1200: case
1210: base
1220: annular wall
1221: opening
1230: pivoting base
1240: covering portion
1250: pivoting bar
1260: inner space
1300, 3300, 4300, 5300, 6300: spool
1310: spool body
1320, 3320: second combining tooth
1330: positioning ring
1400, 2400, 3400, 4400, 5400, 6400: ratchet gear
1410, 3410, 4410, 5410: ratchet tooth
1420, 2420, 5420, 6420: outer annular portion
1421: central opening
1422: restricting hole
1430, 2430, 5430, 6430: elevating portion
1431: aperture
1440: clamping arm
1450, 3450: first combining tooth
1600: incremental releasing set
1610: ratchet element
1611, 3611, 4611: ratchet arm
1612: stopping portion
1613: operated portion
1620: elastic element
1700, 3700, 4700, 5700, 6700: knob
1710: restricting member
1800, 4800, 5800: connecting unit
1810, 4810, 5810: screw bar
1820: positioning shaft
4460, 6460: guiding portion
4470: first retaining portion
4471, 4481: free end
4480: second retaining portion
4491, 4492: block
4720, 6720: guiding track
4730: positioning block
4740: post
4750: through hole
4830: fastening barrel
4840, 5840: stopping ring
5431: screw hole
5760: screw post
7000: lace tightening and releasing method
A1: releasing direction
A2: tightening direction
11: axial direction
S01: fastening step
S02: incremental releasing step
S03: full releasing step

### DETAILED DESCRIPTION

The embodiments of the present disclosure will be illustrated with drawings hereinafter. In order to clearly describe the content, many practical details will be mentioned with the description hereinafter. However, it will be understood by the reader that the practical details will not limit the present disclosure. In other words, in some embodiment of the present disclosure, the practical details are not necessary. Additionally, in order to simplify the drawings, some conventional structures and elements will be illustrated in the drawings in a simple way; the repeated elements may be labeled by the same or similar reference numerals.

In addition, the terms first, second, third, etc. are used herein to describe various elements or components, these elements or components should not be limited by these terms. Consequently, a first element or component discussed below could be termed a second element or component. Moreover, the combinations of the elements, the components, the mechanisms and the modules are not well-known, ordinary or conventional combinations, and whether the combinations can be easily completed by the one skilled in the art cannot be judged based on whether the elements, the components, the mechanisms or the module themselves are well-known, ordinary or conventional.

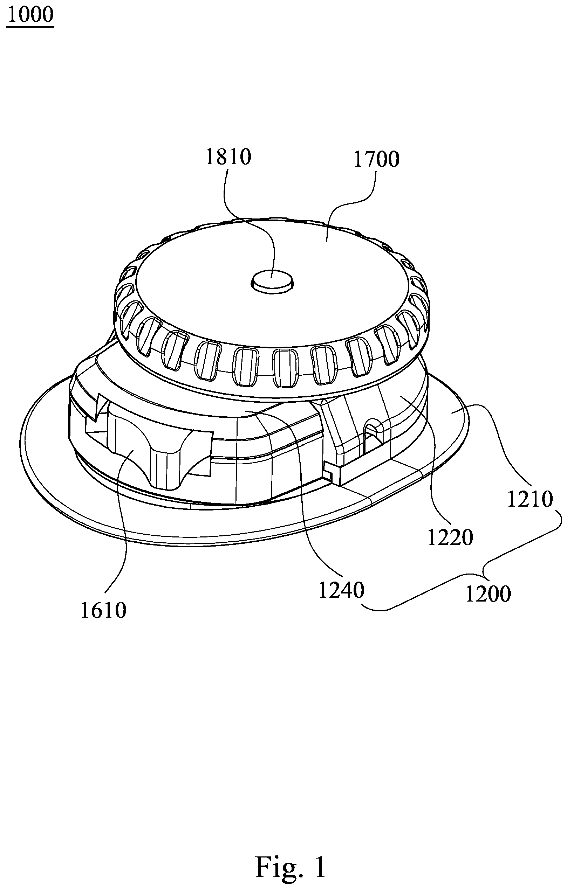

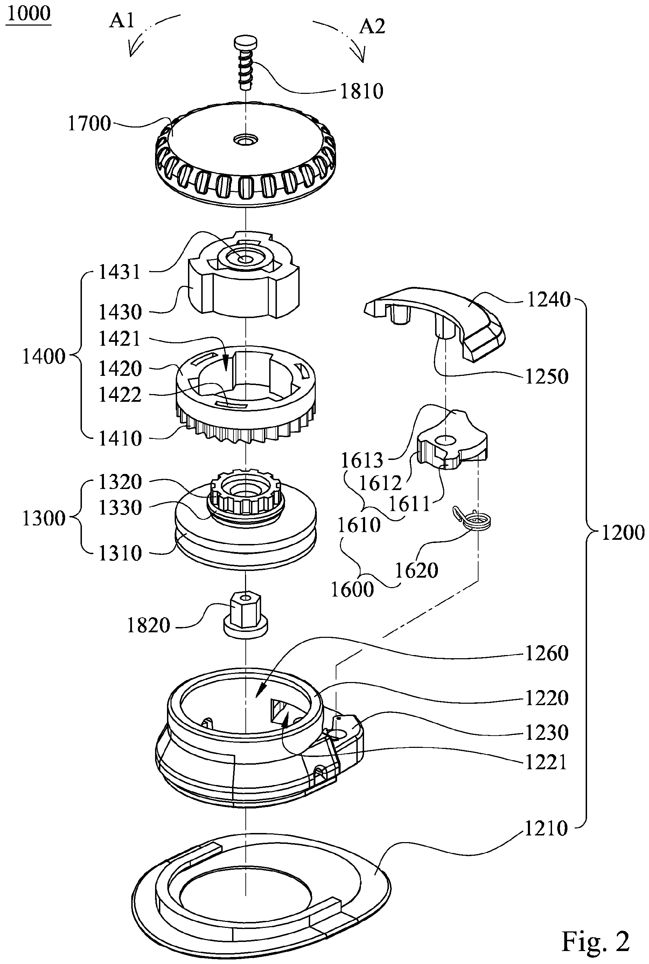

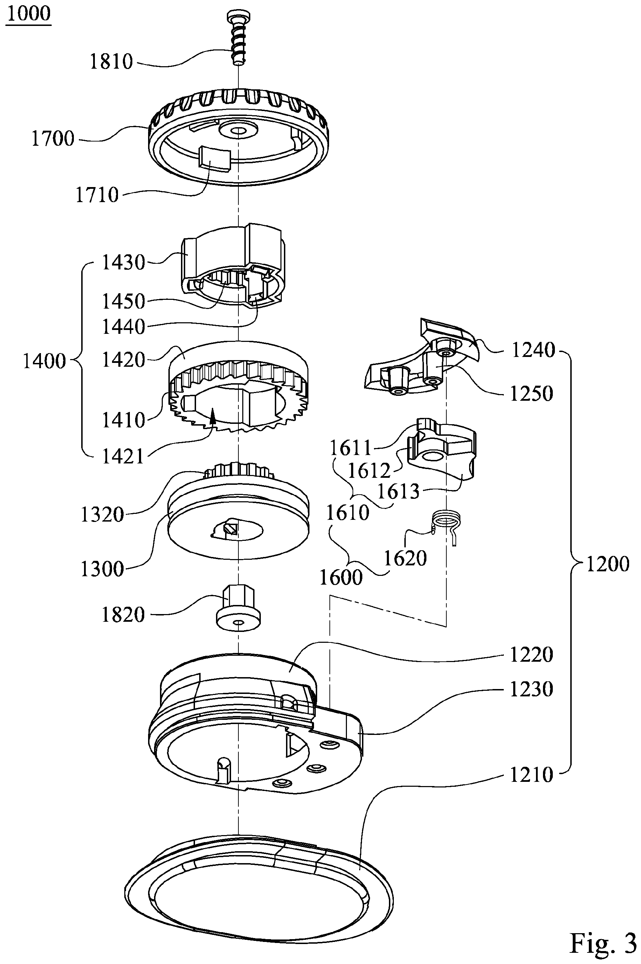

Please refer to Figs. 1, 2 and 3, Fig. 1 shows a three-dimensional schematic view of a fastening device 1000 according to a first embodiment of the present disclosure, Fig. 2 shows one exploded view of the fastening device 1000 of the first embodiment of Fig. 1, and Fig. 3 shows another exploded view of the fastening device 1000 of the first embodiment of Fig. 1. The fastening device 1000 includes a case 1200, a spool 1300, a plurality of ratchet teeth 1410, an incremental releasing set 1600 and a knob 1700. The case 1200 includes an inner space 1260, the spool 1300 is disposed in the inner space 1260 and configured for a lace (not shown) to be wound therearound, and the ratchet teeth 1410 are located in the inner space 1260. The incremental releasing set 1600 includes a ratchet arm 1611 and an operated portion 1613, the ratchet arm 1611 is selectively engaged with at least one of the ratchet teeth 1410, and the operated portion 1613 is linked with the ratchet arm 1611. The knob 1700 is disposed at the case 1200. The ratchet arm 1611 is engaged with at least one of the ratchet teeth 1410 to prohibit the spool 1300 from rotating in a releasing direction A1, and as the knob 1700 is rotated in a tightening direction A2, the ratchet arm 1611 is disengaged from at least one of the ratchet teeth 1410 to allow the spool 1300 to tighten the lace; as the operated portion 1613 is operated, the ratchet arm 1611 is disengaged from at least one of the ratchet teeth 1410, such that allows the lace to be incrementally released.

Therefore, before operating the operated portion 1613, the ratchet arm 1611 may prohibit the spool 1300 from releasing the lace, and after operating the operated portion 1613, the lace may be incrementally released, thereby achieving a goal of incrementally releasing the lace. Details of the fastening device 1000 may be described hereinafter.

The fastening device 1000 may further include a ratchet gear 1400, which is disposed in the inner space 1260 and selectively coupled to the spool 1300, and the ratchet teeth 1410 are located at the ratchet gear 1400, thereby being located in the inner space 1260. The ratchet gear 1400 may include an outer annular portion 1420 and an elevating portion 1430, the ratchet teeth 1410 are located at the outer annular portion 1420, and the elevating portion 1430 is engaged with the outer annular portion 1420 and includes an aperture1431.

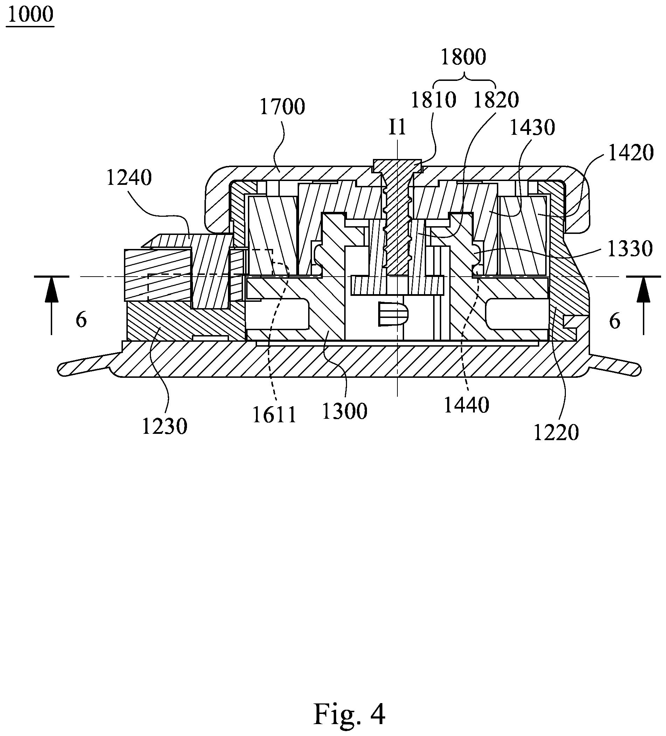

The outer annular portion 1420 may have a hollow cylinder-shaped structure and includes a central opening 1421, the central opening 1421 has a shape corresponding to a shape of the elevating portion 1430 to allow the elevating portion 1430 to be elevatably coupled thereto, and, the elevating portion 1430 may be moved relative to the outer annular portion 1420 along an axial direction l1 (shown in Fig. 4), but cannot be rotated relative to the outer annular portion 1420.

The ratchet gear 1400 may further include a plurality of first combining teeth 1450 and three clamping arms 1440, the first combining teeth 1450 and the three clamping arms 1440 are located at an inner side of the elevating portion 1430, and each of the clamping arms 1440 includes a radial tab (not labeled) located at a lower end thereof.

The spool 1300 may include a spool body 1310, a plurality of second combining teeth 1320 and a positioning ring 1330, the second combining teeth 1320 are located above the spool body 1310, and the positioning ring 1330 are located between the second combining teeth 1320 and the spool body 1310. The second combining teeth 1320 are configured to selectively engage with the first combining teeth 1450, and the positioning ring 1330 may be coordinated with the clamping arms 1440.

The operated portion 1613 may expose from the case 1200, thereby facilitating usage of the user. Precisely, the case 1200 may include an annular wall 1220 and a pivoting base 1230. The annular wall 1220 may include an opening 1221, and the pivoting base 1230 protrudes radially and outward from the annular wall 1220. The ratchet arm 1611 and the operated portion 1613 are connected integrally and are pivoted at the pivoting base 1230, and the ratchet arm 1611 extends into the inner space 1260 from the opening 1211 to engage with at least one of the ratchet teeth 1410, and the operated portion 1613 is located outside of the opening 1221. The case 1200 may further include a covering portion 1240, a pivoting bar 1250 and a base 1210, the covering portion 1240 may cover on the pivoting base 1230 to cover the ratchet arm 1611 while not cover the operated portion 1613, and therefore the operated portion 1613 may expose from the case 1200. The pivoting bar 1250 protrudes downward from the covering portion 1240, and the base 1210 may be configured for the annular wall 1220 and the pivoting base 1230 to be disposed thereon.

To be more specific, the annular wall 1220 may surround the inner space 1260, the pivoting base 1230 is integrally connected to an outer surface of the annular wall 1220, and the opening 1221 penetrates a main body of the annular wall 1220 to allow the inner space 1260 to be communicated with an outside. The incremental releasing set 1600 includes a ratchet element 1610, a hook structure of one end of the ratchet element 1610 may be defined as the ratchet arm 1611, a lever structure of the other end of the ratchet element 1610 may be defined as the operated portion 1613, the ratchet element 1610 may include a pivoting hole (labeled) configured for the pivoting bar 1250 to pass therethrough, such that the ratchet element 1610 may be pivotally positioned at the pivoting base 1230 from the opening 1221, the ratchet element 1610 may extend into the inner space 1260, thereby allowing the ratchet arm 1611 to correspond to the ratchet teeth 1410, and the operated portion 1613 exposes from the opening 1221.

The knob 1700 may include a hole (not labeled) and three restricting members 1710, the three restricting members 1710 protrude downward from an inner top of the knob 1700 along the axial direction 11, and the three restricting members 1710 are configured to insert into three restricting holes 1422 of the outer annular portion 1420, thereby rotation of the knob 1700 may rotate the ratchet gear 1400. The fastening device 1000 may further include a connecting unit 1800 (labeled in Fig. 4), the connecting unit 1800 may include a screw bar 1810 and a positioning shaft 1820, the positioning shaft 1820 passes the spool 1300 upward, the screw bar 1810 passes the hole and the aperture 1431 to screw with the positioning shaft 1820, one end of the positioning shaft 1820 is abutted against the elevating portion 1430, and the other end thereof is restricted in an axial space of the spool 1300.

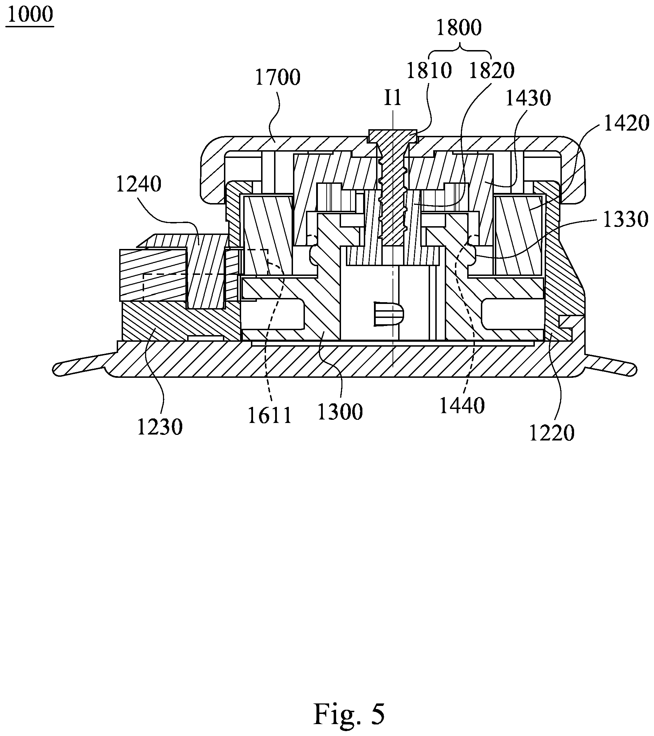

Please refer to Figs. 4 and 5, with reference of Figs. 2 to 3, Fig. 4 shows one cross-sectional view of the fastening device 1000 of the first embodiment of Fig. 1, and Fig. 5 shows another cross-sectional view of the fastening device 1000 of the first embodiment of Fig. 1. The ratchet gear 1400 is selectively coupled to the spool 1300, and operating the knob 1700 may release a coupling between the ratchet gear 1400 and the spool 1300, thereby allowing the lace to be fully released. Precisely, the knob 1700 may be operated along the axial direction l1 to be positioned at a first position or a second position. As shown in Fig. 4, the knob 1700 is in the first position, the elevating portion 1430 is not lifted, the first combining teeth 1450 are combined with the second combining teeth 1320, rotating the knob 1700 in the tightening direction A2, the ratchet element 1610 is pushed to swing outward to allow the ratchet arm 1611 to separate from the ratchet teeth 1410, and the spool 1300 is allowed to rotate in the tightening direction A2, thereby fastening the lace. If the user stops rotating the knob 1700, the ratchet arm 1611 will engage with the ratchet teeth 1410, prohibiting the spool 1300 from rotating in the releasing direction A1, thereby securing the lace.

As fully releasing the lace, the user may pull the knob 1700 upward to the second position, at this time the elevating portion 1430 is lifted, the first combining teeth 1450 are disengaged from the second combining teeth 1320, and the spool 1300 is not affected and may be freely rotated in the releasing direction A1. It is noted that, as fully releasing the lace, although only the elevating portion 1430 is lifted, and the outer annular portion 1420 is not lifted to allow the ratchet arm 1611 to be still engaged with the ratchet teeth 1410, but the first combining teeth 1450 are already disengaged from the second combining teeth 1320, such that the coupling between the ratchet gear 1400 and the spool 1300 are released, and the spool 1300 will not be effected by the engagement between the ratchet arm 1611 and the ratchet teeth 1410.

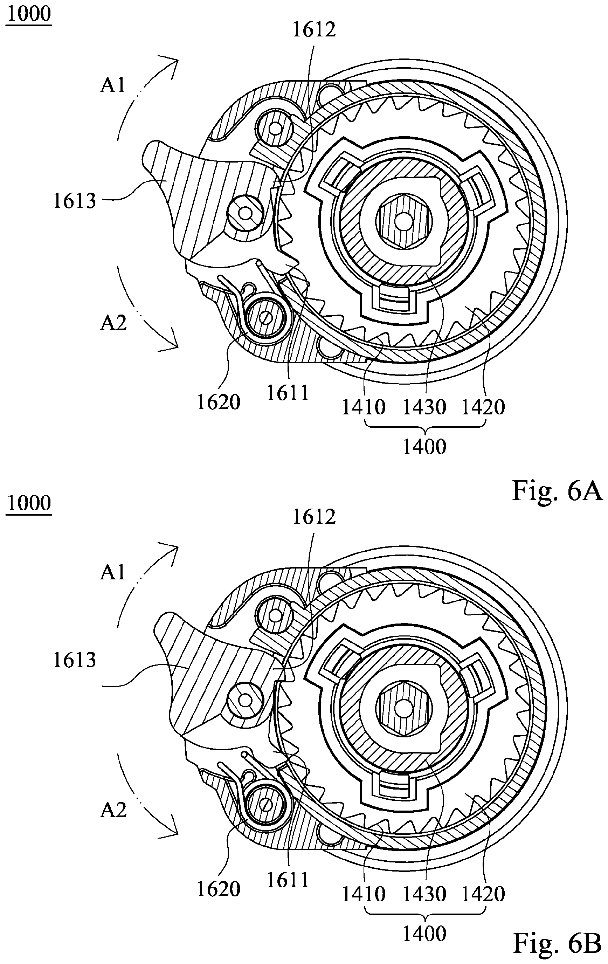

Please refer to Figs. 6A and 6B, with references of Figs. 2 to 5, Fig. 6A shows one cross-sectional view of the fastening device 1000 of the first embodiment of Fig. 4 taken along line 6-6, and Fig. 6B shows another cross-sectional view of the fastening device 1000 of the first embodiment of Fig. 4 taken along line 6-6. The incremental releasing set 1600 may further include a stopping portion 1612, the stopping portion 1612 is arranged with the ratchet arm 1611 in an interval, and as the ratchet arm 1611 is engaged with at least one of the ratchet teeth 1410, the stopping portion 1612 is not engaged with any one of the ratchet teeth 1410; as the operated portion 1613 is operated to allow the ratchet arm 1611 to disengage from at least one of the ratchet teeth 1410, the stopping portion 1612 is engaged with at least another one of the ratchet teeth 1410, thereby stopping the spool 1300. Precisely, another hook structure of the ratchet element 1610 may be defined as the stopping portion 1612, the stopping portion 1612 is so configured that it and the ratchet arm 1611 do not engage with the ratchet teeth 1410 at the same time. As shown in Fig. 6A, as the ratchet arm 1611 is engaged with the ratchet teeth 1410, rotation of the spool 1300 in the releasing direction A1 may be prohibited as the aforementioned; on the contrary, as the user operates the operated portion 1613, the ratchet element 1610 may be swung around the pivoting bar 1250, allowing the ratchet arm 1611 to swing outward and to separate from the ratchet teeth 1410, at this time the spool 1300 is released and may be rotated in the releasing direction A1; however, since the stopping portion 1612 swings inward to engage with the ratchet teeth 1410 while the ratchet arm 1611 swings outward, the spool 1300 is stopped by the stopping portion 1612 and rotation in the releasing direction A1 is no more allowed, thereby assisting stopping rotation of the spool 1300 before the ratchet arm 1611 returns, and also assisting incremental release of the lace. In other words, with the configuration of the stopping portion 1612, as the user operates the operated portion 1613, the lace will not be fully released, and only one segment of the lace is released. It is noted that, after the user operates the operated portion 1613, a range that the spool 1300 may be rotated is equal to a length of a ratchet tooth 1410, thereby incrementally releasing the lace. In other embodiments, a range that the spool may be rotated is equal to the lengths of a plurality of ratchet teeth, and the present disclosure is not limited thereto.

In addition, the incremental releasing set 1600 may further include an elastic element 1620, and the elastic element 1620 stores an energy as the ratchet arm 1611 is disengaged from at least one of the ratchet teeth 1410. The elastic element 1620 may have a torsional spring structure, one end of the elastic element 1620 may be restricted at the pivoting base 1230, the other end thereof may be abutted against the ratchet arm 1611, such that the ratchet arm 1611 may drive the elastic element 1620 to be rotated and to restore the energy, thereby the elastic element 1620 may push the ratchet arm 1611 to return after the forced exerted on the operated portion 1613 is removed.

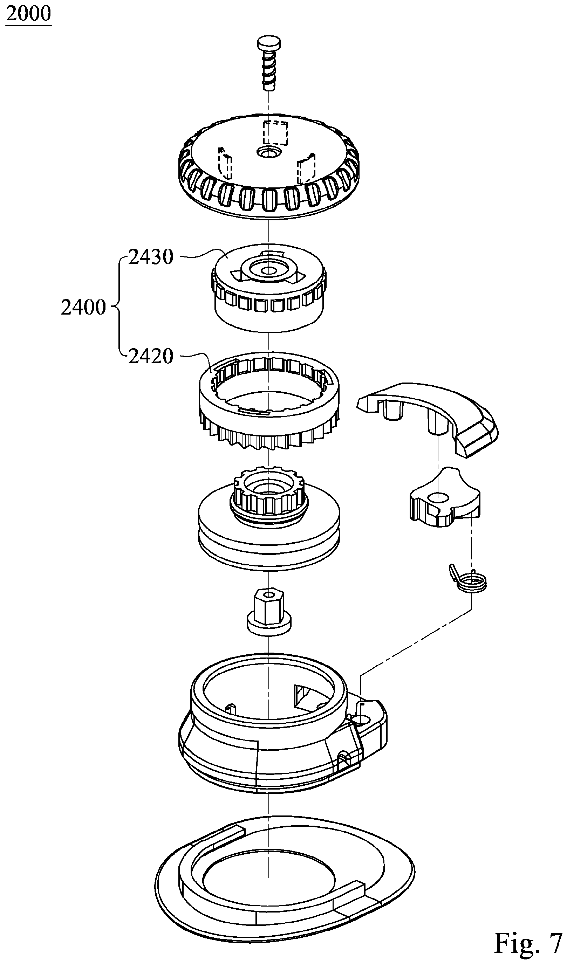

Please refer to Fig. 7, and Fig. 7 shows an exploded view of a fastening device 2000 according to a second embodiment of the present disclosure. The fastening device 2000 is similar to the fastening device 1000 shown in Figs. 1 to 6B, but the difference is that the structure of the ratchet gear 2400 is different from that of the ratchet gear 1400. The ratchet gear 2400 also includes an outer annular portion 2420 and an elevating portion 2430, but the elevating portion 2430 is substantially ring shaped, and includes a plurality of outer radial teeth coordinated with a plurality of inner radial teeth of the outer annular portion 2420. Other structures of the fastening device 2000 being identical to that of the structures of the fastening device 1000 will not be repeated.

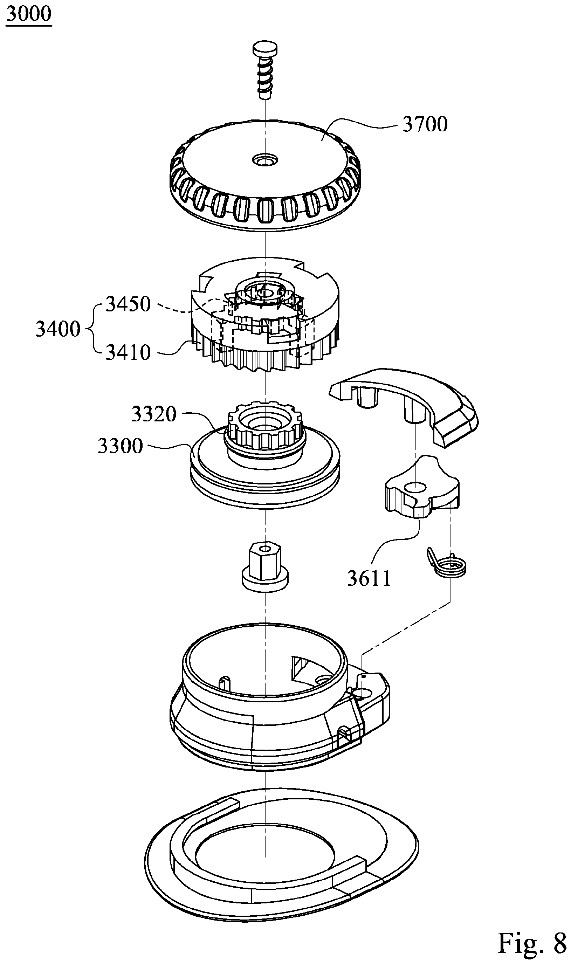

Please refer to Fig. 8, and Fig. 8 shows an exploded view of a fastening device 3000 according to a third embodiment of the present disclosure. The fastening device 3000 is similar to the fastening device 1000 shown in Figs. 1 to 6B, but the difference is that the structure of the ratchet gear 3400 is different from that of the ratchet gear 1400. The ratchet gear 3400 is a one-piece element, and in other words, it does not separate into the outer annular portion 1420 and the elevating portion 1430 as the ratchet gear 1400. The ratchet gear 3400 is a cylinder-shaped structure and includes a plurality of first combining teeth 3450 and a plurality of ratchet teeth 3410, the first combining teeth 3450 are located at an inner surface of the ratchet gear 3400 and correspond to a plurality of second combining teeth 3320 of the spool 3300, the ratchet teeth 3410 are located at an outer surface of the ratchet gear 3400 and correspond to ratchet arm 3611, pulling the knob 3700 upward may lift whole of the ratchet gear 3400, thereby separating the first combining teeth 3450 and the second combining teeth 3320, and although the ratchet teeth 3410 are still engaged with the ratchet arm 3611, because the spool 3300 is released, it can rotate freely. In other embodiments, the heights of the ratchet teeth can be changed to allow the ratchet teeth to separate from the ratchet arm and not correspond thereto as the ratchet gear as a whole is lifted, and in other words, in the structure configuration, the ratchet arm may be engaged with the ratchet teeth or disengaged from the ratchet teeth as fully released, and the present disclosure is not limited thereto. Other structures of the fastening device 3000 being identical to that of the structures of the fastening device 1000 will not be repeated.

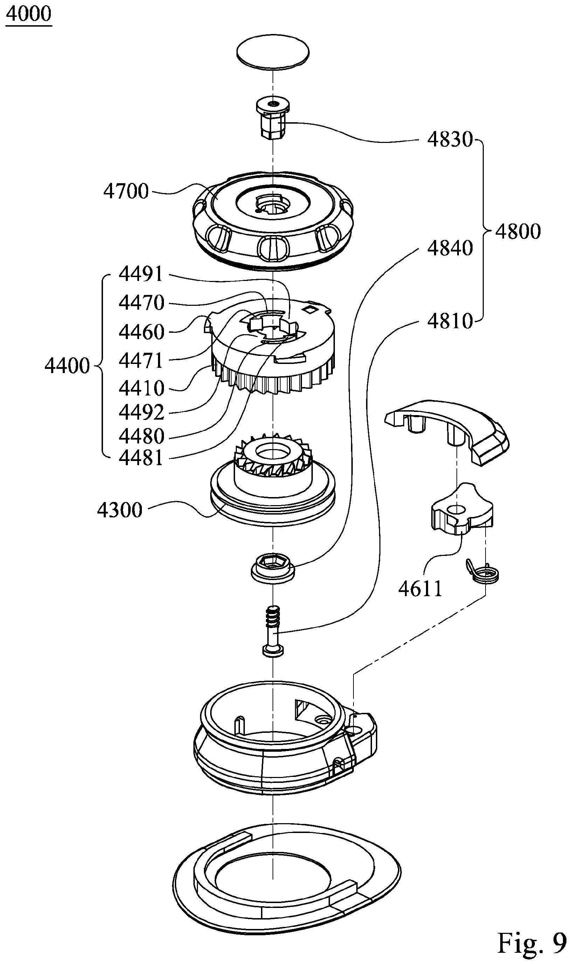

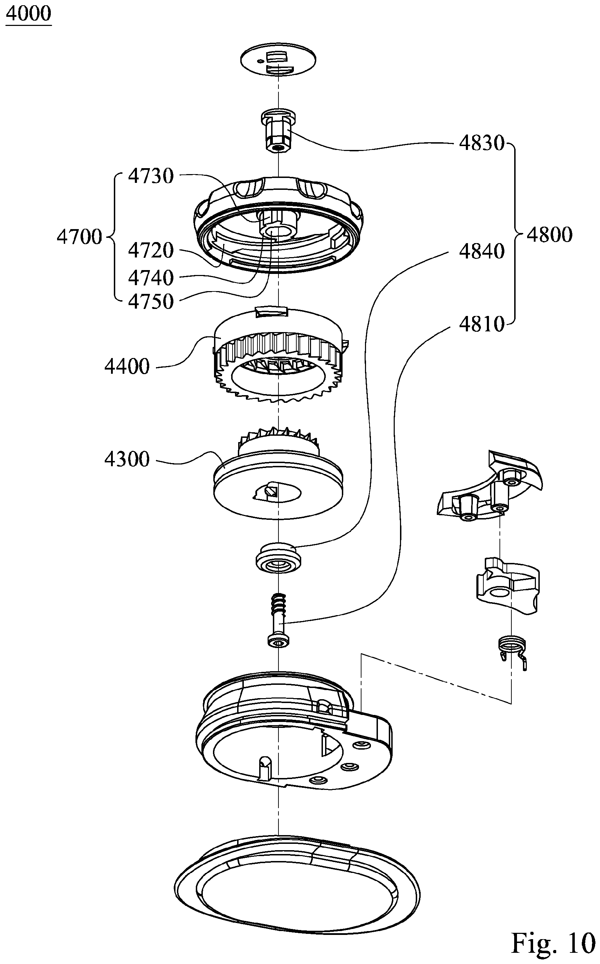

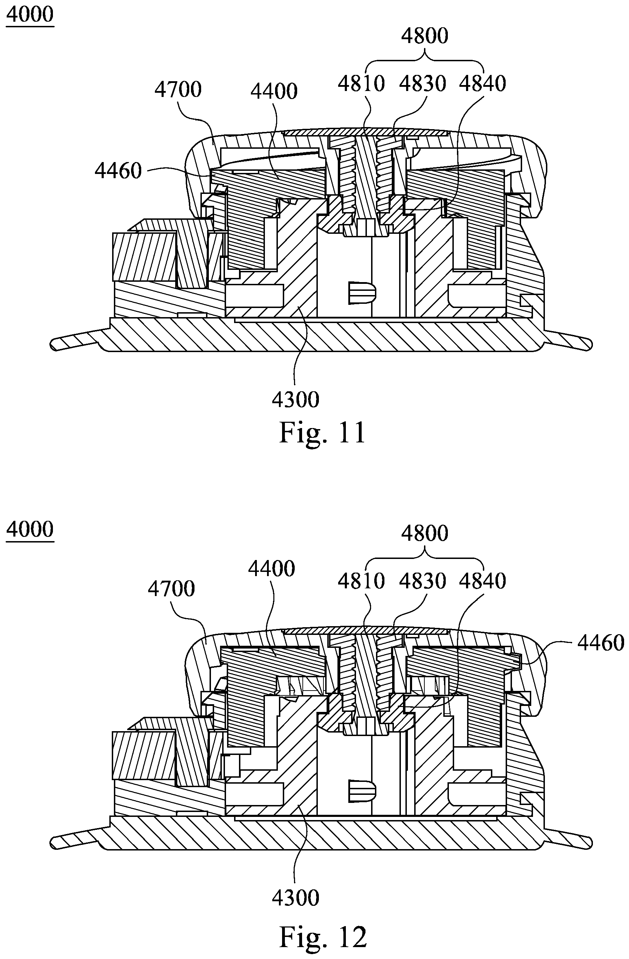

Please refer to Figs. 9, 10, 11 and 12, Fig. 9 shows one exploded view of a fastening device 4000 according to a fourth embodiment of the present disclosure, Fig. 10 shows another exploded view of the fastening device 4000 of the fourth embodiment of Fig. 9, Fig. 11 shows one cross-sectional view of the fastening device 4000 of the fourth embodiment of Fig. 10, and Fig. 12 shows another cross-sectional view of the fastening device 4000 of the fourth embodiment of Fig. 10. In the fastening device 4000, the knob 4700 may include at least one guiding track 4720, the ratchet gear 4400 may include at least one guiding portion 4460 coupled with the guiding track 4720, and the knob 4700 is rotated in the releasing direction such that the ratchet gear 4400 is guided by the at least one guiding track 4720 so as to be lifted, thereby releasing the coupling between the ratchet gear 4400 and the spool 4300.

As shown in Fig. 10, the ratchet gear 4400 is a one-piece element, a number of the guiding portions 4460 is three, each of the guiding portion 4460 protrudes outward from the outer surface of the ratchet gear 4400 and has a helical toothed structure, and the guiding track 4720 is located at an inner surface of the knob 4700 to correspond to the guiding portion 4460.

The ratchet gear 4400 may include a first retaining portion 4470, a second retaining portion 4480 and two blocks 4491, 4492, the first retaining portion 4470 and the second retaining portion 4480 include free ends 4471, 4481, and the free ends 4471, 4481 may move radially and inward as being forced, and may return after the force is removed.

The knob 4700 may further include a post 4740, a through hole 4750 and two positioning blocks 4730, the post 4740 protrudes downward along the axial direction (not labeled in Figs. 9 to 12), the through hole 4750 penetrates the post 4740, and the two positioning blocks 4730 are symmetrically disposed at an outside of the post 4740 along the radial direction.

As shown in Fig. 11, as the ratchet gear 4400 is not lifted and is coupled to the spool 4300, the lace can be fastened and release of the lace is prevented. On the contrary, as shown in Fig. 12, rotating the knob 4700 in the releasing direction may drive the ratchet gear 4400 to move axially and upward, thereby releasing the coupling between the ratchet gear 4400 and the spool 4300. To be more specific, as the ratchet gear 4400 is not lifted, one positioning block 4730 is located between the free end 4471 of the first retaining portion 4470 and the block 4491, and the other positioning block 4730 is located between the free end 4481 of the second retaining portion 4480 and the block 4492. As the knob 4700 is rotated in the releasing direction, the ratchet gear 4400 cannot be rotated therewith owing to the restriction from the engaging relation between the ratchet arm 4611 and the ratchet teeth 4410, thus the two positioning blocks 4730 may respectively press the two free ends 4471, 4481, the two free ends 4471, 4481 may be radially deformed to allow the knob 4700 to rotate relative to the ratchet gear 4400, and the guiding portion 4460 may be guide by the guiding track 4720, and can be moved upward relative to the guiding track 4720 along the axial direction, thereby changing the position of the ratchet gear 4400. Meanwhile, the aforementioned one positioning block 4730 may be changed to be located between the free end 4471 of the first retaining portion 4470 and the block 4492, and the aforementioned the other positioning block 4730 may be changed to be located between the free end 4481 of the second retaining portion 4480 and the block 4491, thereby positioning the ratchet gear 4400.

The connecting unit 4800 of the fastening device 4000 may further include a fastening barrel 4830, a stopping ring 4840 and a screw bar 4810, the fastening barrel 4830 passes through the through hole 4750 of the knob 4700, the stopping ring 4840 is restricted in the axial space of the spool 4300, and the screw bar 4810 is fastened with the fastening barrel 4830 after passing through the stopping ring 4840.

As the fastening device 4000 shown in Figs. 9 to 12, the lace may be fully released by rotating the knob 4700 to lift the ratchet gear 4400, although the fully releasing method thereof is different from the knobs 1700, 3700 of the fastening devices 1000, 2000 3000, the fully release may be arrived by operating the knobs 1700, 3700, 4700.

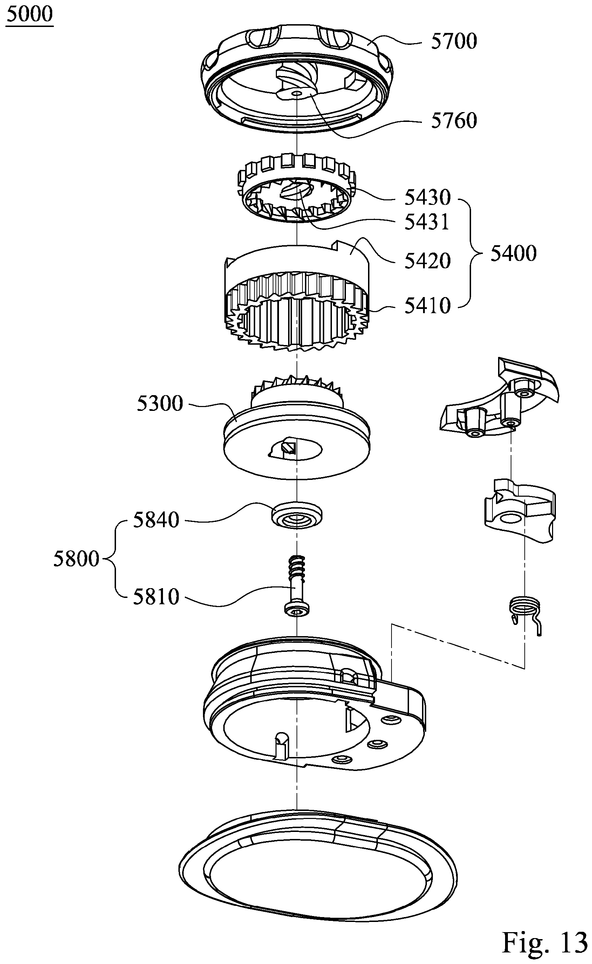

Please refer to Fig. 13, and Fig. 13 shows an exploded view of a fastening device 5000 according to a fifth embodiment of the present disclosure. In the fastening device 5000, the ratchet gear 5400 may include an outer annular portion 5420 and an elevating portion 5430, a plurality of ratchet teeth 5410 are located at the outer annular portion 5420, the elevating portion 5430 is coupled to the outer annular portion 5420 and includes a screw hole 5431, the knob 5700 includes a screw post 5760 coupled to the screw hole 5431, and rotating the knob 5700 in the releasing direction allows the elevating portion 5430 to be lifted, thereby releasing the coupling between the ratchet gear 5400 and the spool 5300. Precisely, the fastening device 5000 may fully release the lace by rotating the knob 5700 to lift the ratchet gear 5400, but the goal is arrived by the structure of the screw hole 5431 and the screw post 5760, which is different from the fastening device 4000.

The connecting unit 5800 of the fastening device 5000 may include a stopping ring 5840 and a screw bar 5810, the stopping ring 5840 is restricted in the axial space of the spool 5300, and the screw bar 5810 passes through the stopping ring 5840 to fasten with the screw past 5760.

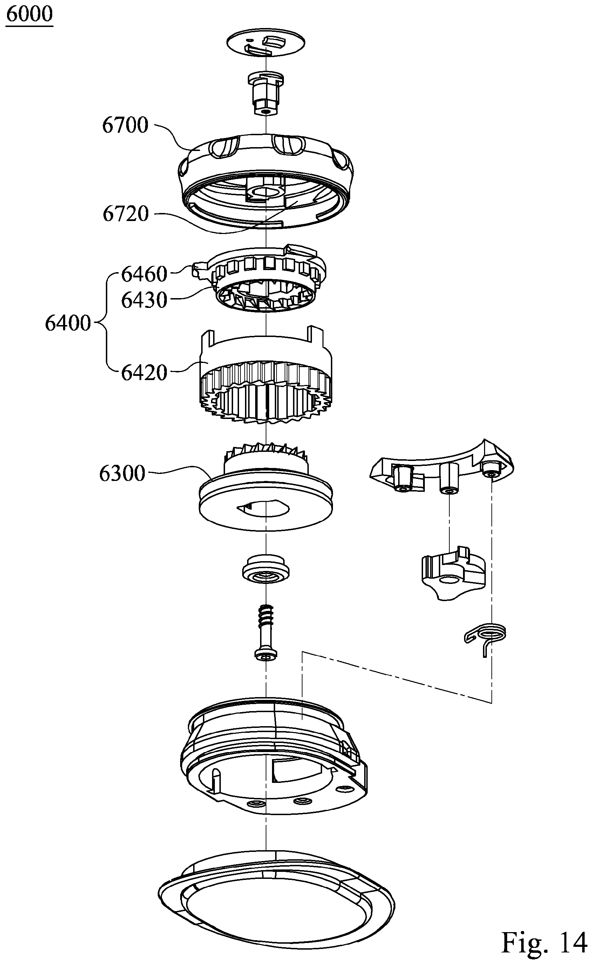

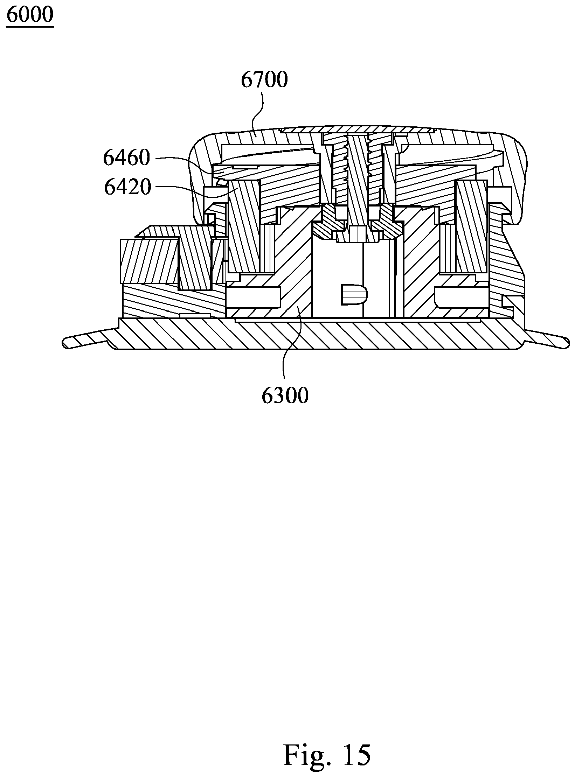

Please refer to Figs. 14 and 15, Fig. 14 shows an exploded view of a fastening device 6000 according to a sixth embodiment of the present disclosure, and Fig. 15 shows a cross-sectional view of the fastening device 6000 of the sixth embodiment of Fig. 14. The fastening device 6000 of the six embodiment is similar to the fastening device 4000 shown in Figs. 9 to 12, the knob 6700 may include a guiding track 6720, the ratchet gear 6400 may include an outer annular portion 6420, an elevating portion 6430 and three guiding portions 6460, and the three guiding portions 6460 protrude radially and outward from an upper edge of the elevating portion 6430 to couple to the guiding track 6720. Therefore, rotating the knob 6700 can lift the elevating portion 6430, such that the coupling between the ratchet gear 6400 and the spool 6300 is released, thereby allowing the lace to be fully released. Other structures of the fastening device 6000 similar to the fastening device 4000 will not be repeated.

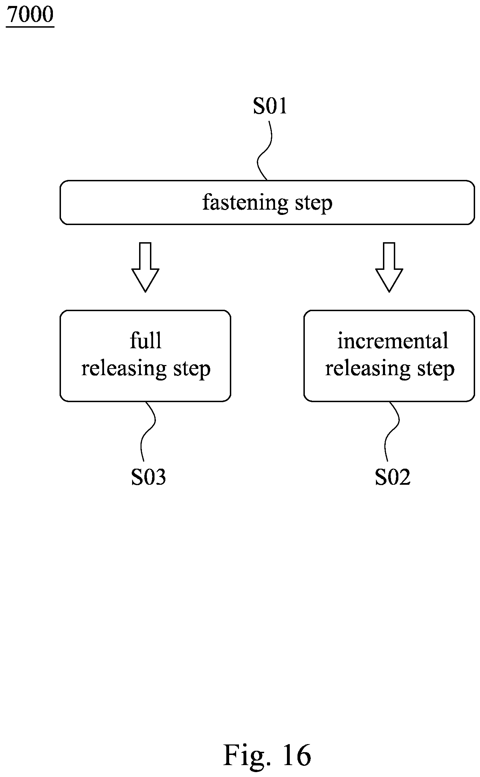

Please refer to Fig. 16, with references of Figs. 1 to 6B, and Fig. 16 shows a block flow chart of a lace tightening and releasing method 7000 according to a seventh embodiment of the present disclosure. The lace tightening and releasing method 7000 includes a fastening step S01 and an incremental releasing step S02.

In the fastening step S01, a fastening device 1000 disposed at an article is operated, the fastening device 1000 includes a case 1200, a spool 1300, a plurality of ratchet teeth 1410, a ratchet arm 1611 and a knob 1700, the spool 1300 is coupled to a lace and located within the case 1200, and as the knob 1700 is rotated in a tightening direction A2, a ratchet arm 1611 is disengaged from at least one of the ratchet teeth 1410 to allow the spool 1300 to fasten the lace.

In the incremental releasing step S02, an operated portion 1613 of the fastening device 1000 is operated, the ratchet arm 1611 is disengaged from at least one of the ratchet teeth 1410 to engage with at least another one of the ratchet teeth 1410, thereby allowing the spool 1300 to rotate in a releasing direction A1 to release one segment of the lace.

Precisely, in the fastening step S01, through operating the knob 1700 to rotate the ratchet gear 1400, the ratchet gear 1400 is rotated to displace the ratchet arm 1611, such that the ratchet arm 1611 may separate from the ratchet teeth 1410, thereby fastening the lace. As the knob 1700 stops rotating, the ratchet arm 1611 is engaged with the ratchet teeth 1410 to prohibit the spool 1300 from releasing the lace. In the incremental releasing step S02, as the user operates the operated portion 1613 one time, the ratchet arm 1611 will disengage from the ratchet teeth 1410, thereby releasing one segment of the lace.

As preferring for fully releasing the lace, the lace tightening and releasing method 7000 may further include a full releasing step S03, the knob 1700 is operated to allow the ratchet arm 1611 of the fastening device 1000 not to prohibit the spool 1300 from rotating in the releasing direction A1, thereby allowing the lace to be freely released. The knob 1700 may be pulled upward, the coupling between the ratchet gear 1400 and the spool 1300 may be disengaged, and the spool 1300 will not be affected by the engagement between the ratchet teeth 1410 and the ratchet arm 1611 at this time, and may be rotated freely, thereby fully releasing the lace. In addition to pull up the knob 1700 to release the lace, the lace may be fully released by rotating the knob 4700 (labeled in Fig. 9), and the present disclosure is not limited thereto.

Although the present disclosure has been described in considerable detail with reference to certain embodiments thereof, other embodiments are possible. Therefore, the spirit and scope of the appended claims should not be limited to the description of the embodiments contained herein. It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A fastening device, **characterized by**, comprising:
a case, comprising an inner space;
a spool, disposed in the inner space and configured for a lace to be wound therearound;
a plurality of ratchet teeth, located in the inner space;
an incremental releasing set, comprising:
a ratchet arm, selectively engaged with at least one of the ratchet teeth; and
an operated portion, linked with the ratchet arm; and
a knob, disposed at the case;
wherein, the ratchet arm is engaged with at least one of the ratchet teeth to prohibit the spool from rotating in a releasing direction, and as the knob is rotated in a tightening direction, the ratchet arm is disengaged from at least one of the ratchet teeth to allow the spool to tighten the lace; as the operated portion is operated, the ratchet arm is disengaged from at least one of the ratchet teeth, such that allows the lace to be incrementally released.

2. The fastening device of claim 1, **characterized by**, further comprising:
a ratchet gear, disposed in the inner space and selectively coupled to the spool, the ratchet teeth being located at the ratchet gear.

3. The fastening device of claim 2, **characterized in that**, the ratchet gear is selectively coupled to the spool, and the knob is operated to release a coupling between the ratchet gear and the spool, thereby allowing the lace to be fully released.

4. The fastening device of claim 3, **characterized in that**, the knob comprises at least one guiding track, the ratchet gear comprises at least one guiding portion coupled with the guiding track, and the knob is rotated in the releasing direction such that the ratchet gear is guided by the at least one guiding track so as to be lifted, thereby releasing the coupling between the ratchet gear and the spool.

5. The fastening device of claim 3, **characterized in that**, the ratchet gear comprises an outer annular portion and an elevating portion, the ratchet teeth are located at the outer annular portion, the elevating portion is engaged with the outer annular portion and comprises a screw hole, the knob comprises a screw bar coupled to the screw hole, and the knob is rotated in the releasing direction to allow the elevating portion to be lifted, thereby releasing the coupling between the ratchet gear and the spool.

6. The fastening device of claim 1, **characterized in that**, the incremental releasing set further comprises a stopping portion, the stopping portion is arranged with the ratchet arm in an interval, and as the ratchet arm is engaged with at least one of the ratchet teeth, the stopping portion is not engaged with any one of the ratchet teeth; as the operated portion is operated to allow the ratchet arm to disengage from at least one of the ratchet teeth, the stopping portion is engaged with at least another one of the ratchet teeth, thereby stopping the spool.

7. The fastening device of claim 1, **characterized in that**, the operated portion exposes from the case.

8. The fastening device of claim 7, **characterized in that**, the case comprises:
an annular wall, comprising an opening; and
a pivoting base, protruding radially and outward from the annular wall;
wherein, the ratchet arm and the operated portion are connected integrally and are pivoted at the pivoting base, and the ratchet arm extends into the inner space from the opening to engage with at least one of the ratchet teeth.

9. The fastening device of claim 1, **characterized in that**, the incremental releasing set further comprises an elastic element, and the elastic element stores an energy as the ratchet arm is disengaged from at least one of the ratchet teeth.

10. A lace tightening and releasing method, **characterized by**, comprising:
a fastening step, a fastening device disposed at an article being operated, the fastening device comprising a case, a spool, a plurality of ratchet teeth, a ratchet arm and a knob, the spool being coupled to the lace and located within the case, wherein as the knob is rotated in a tightening direction, the ratchet arm is disengaged from at least one of the ratchet teeth to allow the spool to fasten the lace;
an incremental releasing step, an operated portion of the fastening device being operated, the ratchet arm being disengaged from at least one of the ratchet teeth to engage with at least another one of the ratchet teeth, thereby allowing the spool to rotate in a releasing direction to release one segment of the lace; and
a full releasing step, the knob being operated to allow the ratchet arm of the fastening device not to prohibit the spool from rotating in the releasing direction, thereby allowing the lace to be freely released.
